# EUROPEAN PATENT SPECIFICATION

(11) **EP 1 287 276 B1**
(45) Date of publication and mention of the grant of the patent: **03.05.2006**
(21) Application number: 01920044.3
(22) Date of filing: 05.04.2001
(51) Int. Cl.: F16K 17/06, F16K 31/126, F16K 31/165, F16K 17/04

(54) **DIFFERENTIAL PRESSURE REGULATOR**
DIFFERENZ DRUCKREGLER
REGULATEUR DE PRESSION DIFFERENTIELLE

(30) Priority: 05.06.2000 SE 0002091
(43) Date of publication of application: 05.03.2003
(73) Proprietor: Tour & Andersson AB, 524 80 Ljung (SE)
(72) Inventor: ENGELBREKTSSON, Anders, S-524 32 Herrljunga (SE); TORSTENSSON, Alvar, S-507 43 Boras (SE)
(74) Representative: Pitkänen, Hannu Alpo Antero
(86) International application number: PCT/SE2001/000742
(87) International publication number: WO 2001/094818

(56) References cited:
- EP-A1- 0 451 326
- DE-A1- 3 708 166
- SE-B- 469 729
- SE-C2- 500 969

## Description

The present invention relates to a differential pressure regulator of the type set forth in the preamble of claim 1.

Such regulators are used e.g. to regulate the pressure drop over the contents in a heating or cooling system and are usually built into a water return conduit.

The already known regulators in this field have various deficiencies. E.g. for various relatively limited uses valves dimensioned in various ways are required, and consequently such valves need more production and storage capacity. Also, it is necessary regarding these regulators to pay attention to the presence of a relatively large friction between the moveable parts and the friction variations and the received signals with a not satisfactory accuracy caused thereby. The installation requirements are problematic in several respects. Thus, the building height is often substantial. The attachment of e.g. measuring and signal circuit cables is often fixed and may prove to be unfavorable in certain mounting situations. The exchange and the change of the position of certain parts, particularly during operation, often are difficult or impossible to carry out. Thus, the regulator must be disassembled, a plurality of individual loose parts being obtained, and such loose parts are not always the parts, which are subjected to e.g. wear and tear to a great extent. Consequently, the subsequent mounting will be more lengthy and time-consuming. During an assembly and disassembly it is often necessary to initially remove all the attachments, since these in their attached condition are likely to be subjected to improper stresses. Various measuring and discharge possibilities often do not exist. The adjustment requirement of a required function of the regulator often is less expedient. A change a preadjusted values often is carried out by non-authorized persons. A deairation of the regulators, particularly a complete one, can be a difficult problem and furthermore special tools may be required for this purpose and also a certain precise mounting position may be required. A cut-off function is lacking sometimes or it is not easily accessible or it is complicated, e.g. requiring special tools. Finally, because of errors the adjustment of the regulator and consequently its performance can be changed, e.g. in such a way, that the stroke/flow volume of the valve is restricted. The reliability and the life of the regulators can be unsatisfactory. The problem may be, that it is difficult to quickly, simply and reliably measure a functional failure and then in a suitable way take care of it. Problems with generated noise may arise. A well balanced reaction capacity often does not exist. Also, the material consumption and too large dimensions and proportions respectively sometimes can be troublesome factors.

Examples of already known regulators, which are impaired by at least some of the deficiencies mentioned above, are described in EP-A-0 451 326, EP-A-0 689 652 and DE-A-3 708 166.

The object of the present invention is to counteract and as far as possible eliminate the above-mentioned drawbacks and to develop a differential pressure regulator, which is improved as regards separate details as well as particularly combined details.

These objects are attained according to the present invention by designing a differential pressure regulator of the type described in the introduction mainly in such a way, as is set forth in the characterizing clause of claim 1.

Additional characterizing features and advantages of the invention are set forth in the following description, reference being made to the enclosed drawings, which depict a preferred but not limiting embodiment. The drawings show in detail in:

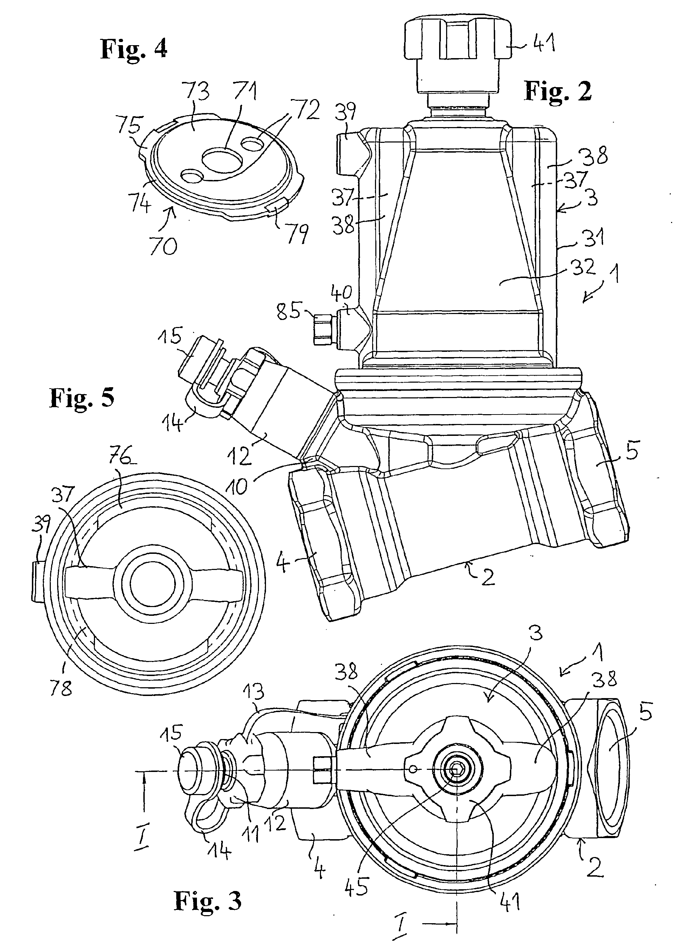

Fig. 1 a diametrical, longitudinal cross-section along line I-I in Fig. 3 of a differential pressure regulator according to the invention in a manually closed position and an open position respectively ;
Fig. 2 and 3 a lateral view and a view from above respectively of the regulator according to Fig. 1;
Fig. 4 a perspective view from above of a spring holder according to the invention; and
Fig. 5 a diametrical cross-section through the bottom part of the upper part of the regulator.

In the drawings the differential pressure regulator 1 is shown in its entirety. It comprises two main parts, namely a lower part 2 and an upper part 3. The lower part comprises an inlet 4 and an outlet 5. However, the flow direction may in particular cases be reverse, the inlet being an outlet and the outlet being an inlet. They are separated from each other by means of a partition 6, which accommodates a seat 7, against which a valve body 8 is designed to act, which constitutes or is connected to the lower end of valve spindle 9. The lower part comprises also discharge and/or measuring connection means 11 of a type known per se, which houses an circumferential flange 10, which projects into the inlet. These means are suitably protected by a cover 12, made of rubber or a plastic material, which by means of an in a suitable way shaped first holder 13 is fastened to said lower part and which by means of a second holder 14 secures a cap 15.

The end of the valve body and the spindle respectively close to the partition is concentrically surrounded by a cup 16, which preferably has a plane bottom 17 with a relatively large diameter and a shorter circular cylindrical wall 18, which surrounds said bottom and has an extension, designed as a step 19 all around, which is connected to the free end and is used as stop means for a flange 20 at coupling end 21 of upper part 3. In the axial wall of step 19 there is a groove 22 all around, designed for a lock ring 23. Below flange 20 a shorter axial, annular projection 24 projects axially into cup 16 at a distance from wall 18, the lower end of the projection being designed as a radially outwardly directed holding flange 25. Flanges 20and 25 include between themselves and wall 24 a groove 26 all around, designed to house an annular bead 27, which constitutes the outer end of a membrane 28, which is extended somewhat and abuts wall 18 towards bottom 17 and then via a soft rounded fold 29, while retreating from wall 18 and bottom 17, becomes a plane, central part 30 at a level roughly between bead 27 and bottom 17 in a closed regulating position. The outer diameter of holding flange 25 is somewhat smaller than the inner diameter of the cup, at least regarding this level, the membrane being fastened between wall 18 and flange 25.

Upper part 3 comprises a house 31, which e.g. is die-cast and can be connected to the lower part by means of said coupling end 21, and in the coupling movement per se there is no relative torsion between the lower part and the upper part despite the fact, that the upper part and the lower part can be rotated limitlessly in relation to each other. In this way the advantage is obtained, that the upper part quickly and without problems steplessly can occupy an arbitrary rotated position in relation to the lower part in order to meet any requirements as to positional alignment between the lower part and the upper part, and that possibly existing connections do not have to be removed , when the upper part and the lower part are joined to each other and disassembled from each other respectively. Also, the connections are not subjected to inappropriate stresses.

House 31 suitably has a rotational symmetrical cross-section and preferably comprises a central portion 32, designed as a truncated cover in an axial direction, the lower part of which coincides with or is adjacent coupling end 21. This cone-shaped portion houses spindle 9 as well as a cone-shaped compression spring 33, which surrounds the spindle and the upper narrow end of which is retained by a support 34, which with a central hole 35 having an inner thread is threaded on the spindle, which is provided with an outer thread, and which with two projections 36 on mutually diametrically opposite sides is guided in axial guiding channels 37 in house 31. These grooves are made in parts 38 of the house, which are designed in a corresponding way. In this manner a torsion of the spindle will result in, that support 34, which is not rotatable , will move in an axial direction in house 31 and thereby compress spring 33 and let it expand respectively.

One of house parts 38 is e.g. provided with an upper connection 39 and a lower connection 40, which are designed for partly signaling circuit connection and partly deairation. The connection, which depending on the assembly position of the regulator ends up in an upper position, is used for deairation, whereas the other connection is used for signaling circuit connection. The connection or connections, which possibly are not used, can be provided with a plug 85.

Spindle 9 extends with its outer end into the area within the free end of house 31, which end receives a bushing 42, the end of which, which projects out of the house, is surrounded by a hand wheel 41. The hand wheel is rotatably mounted on the bushing and is, with an inner thread 43, threaded on an outer thread 44 on house 31. However, bushing 42 is not rotable but axially moveable in a relative way on the outer spindle end, which is not rotation symmetrical, but e.g. hexagonal, and is inserted into an in a corresponding way designed blind hole 80 in the bushing, which is rotated by means of an opening 45, made in the free bushing end, e.g. for a hexagon spanner. Bushing 42 is inserted from within into a circumferential flange 46 in the house, a flange 47 all around and mounted on the remote bushing end projecting into a groove 48, which surrounds the inner end of the opening of the circumferential flange, in house 31 and thus being used as an insertion stop. The bushing is surrounded by an O-ring 50, which is inserted into a groove 49 all around and seals against the opening of the circumferential flange , and keeps , close to its free outer end by means of a locking ring 51, the hand wheel 41 in place.

Close to the bushing but at a small distance from it and the outer gable of house 31 respectively the spindle is surrounded by a groove 52 and a locking ring 53, inserted in the groove, which is designed to prevent, that support 36, already at a minor prestressing of spring 33, abuts said gable and in this way limits or eliminates the movement path of the valve body. Where appropriate locking ring 53 enters into an extension 54 all around in the support adjacent to its inner thread, the locking ring in this way being efficiently locked along about 300° of the cross-section area of the locking ring and it will be practically impossible for the locking ring to leave its position, when the rotation of the spindle is continued. Said groove 52 must be deeper than the depth of the outer thread in a radial direction in order to avoid a deformation of the thread and a loosening of the locking ring.

Valve body 8 is at its end , which is exposed to seat 7, provided with a groove 56 all around, which suitably is roughly semicircular in its cross-section and has an engaging lip 57. Subsequent to an insertion of an O-ring 58 into the groove the radially projecting lip is pressed downwards into an axial direction, the O-ring being squeezed and projecting with only a portion of its axial extension through groove 56, which in the same direction roughly is reduced by halves. In this way the O-ring is efficiently kept in place and is extended at the same time in a radial direction in order to optimally seal against seat 7 in a closing position.

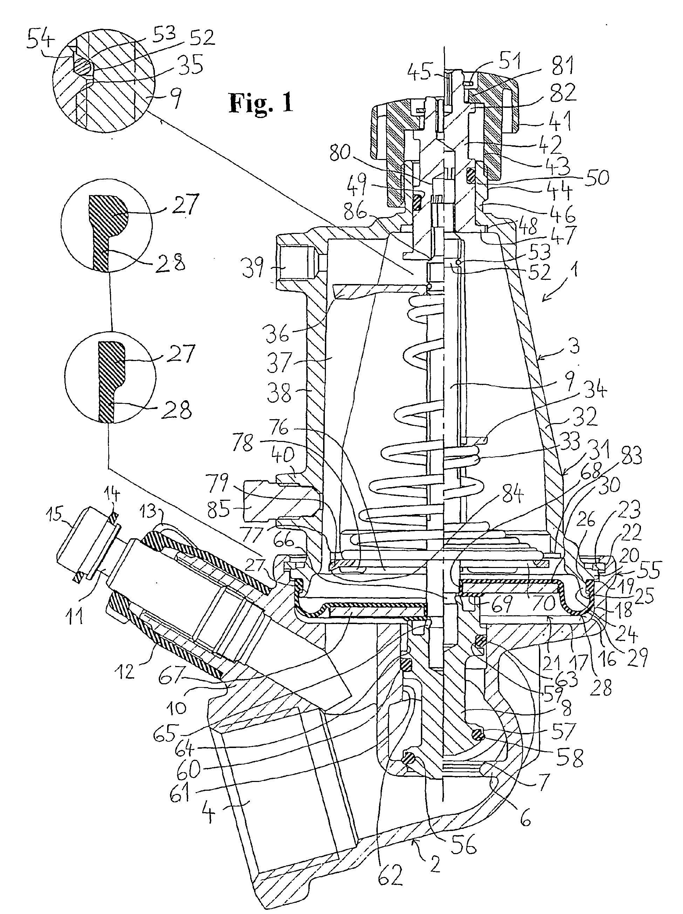

Further away from seat 7 the valve body is surrounded by a groove 59, in which however the groove wall, which faces the seat, suitably is somewhat withdrawn in order to pass a stop 60 in bore 61 of lower part 2 for the valve body and to more readily fill up the more narrow part 62 of this bore close to the seat. The groove wall, which is turned away from the seat, fills on the other hand with a slip fit up the upper bore part, which has a large diameter. In a closed position (the left portion in Fig. 1) an O-ring 63, which is inserted in groove 59, abuts step 60 and accomplishes in this way a satisfactory sealing between the inlet and the outlet. Said O-ring 63 has such small dimensions in relation to the rest of said bore part, that the least possible friction is obtained between these parts. A sealing effect is aimed at and is obtained only, when O-ring 63 abuts said step with a certain elastic deformation, which results in the sealing function.

Further away from the seat the end side of the valve body is provided with a groove all around, which is open in an axial direction and used to form a thinner annular wall 65 on the inner side, which wall is pressed into a groove 66 around the spindle end, which is fastened to the valve body. In this way the valve body and the spindle constitute a homogenous unit.

Membrane 28 is supported with its plane portion 30 by a membrane plate 67, also plane, and suitably, with its intermediate part 68, provided with holes, with which it is slipped onto the spindle, is forced onto and around the center, with its holes, of the plate in order to make it abut the lower side of the plate having a lower, annular termination 69, which softly is allowed to abut the side of the valve body close to the cup. The membrane and the plate suitably are vulcanized together in order to obtain an easily mountable unit, which preferably is slidably mounted on the spindle.

Spring 33 is supported with its wide lower end by a spring holder 70, which suitably comprises a stamped and bent metal plate having a central hole 71 with a diameter, which is much larger than the diameter of the spindle, which projects through said hole, and has holes 72 for a mounting fixture. Center 73 of the holder suitably is elevated in order to obtain a lower edge section 74 all around, against which the spring abuts in a self-centering way. In two mutually diametrically opposite places the edge section is extended outwards in a radial direction in order to form bayonet projections 75, designed to be inserted into house 31 through corresponding recesses 76, circumferentially seen outside and in an axial direction above which the house is provided with a locking groove 77 all around, in which projections 75 are designed to be inserted. Thus, the locking groove is limited downwards by flange sections 78, which are terminated symmetrically by guiding channels 37, i.e. each guiding channel being centrally arranged in relation to the corresponding flange section. Each one of the projections is centrally provided with a downwardly stamped locking lug 79, which snaps into the guiding channel, when the spring holder is turned 90° into its mounting position. Thus, the extension of the locking groove in the axial direction is sufficiently large in order to initially house the total extension in an axial direction of the projections and the locking lugs, which are somewhat pressed downwards.

A differential pressure regulator designed in this way functions in the following manner: The mounting of the parts of the differential pressure regulator is to begin with simple and reliable. The lower part comprises, with the exception of measuring connecting means 11, no movable parts. Its coupling end 55 suitably has an angle of inclination of 15° in relation to the axis of flow passage 4,5, whereas circular edge 10 can have an angle of 45° in relation to said axis. This means, that the molding and the tooling, the accessibility and the adaptability are facilitated. Other arbitrary angular positions of said parts are of course possible.

In the upper part bushing 42, provided with O-ring 50 is initially inserted from within through circumferential edge 46, until flange 47 abuts step 48. Then hand wheel 41 is screwed onto thread 44 of edge 46, until, with an inner flange 81, it abuts an outer bushing flange 82, in which position the hand wheel is secured on the bushing by mounting locking ring 51 on the latter.

As regards the rest of the "guts" of the upper part, it can be assembled separately into an integral unit, which it is easy to insert into house 31 and to remove there from respectively. The valve body can initially be provided with the two O-rings and be mounted on the spindle in the described manner. Then the membrane plate with its membrane is mounted on the spindle and will be supported by the valve body, subsequent to which spring holder 70 and spring 33 are mounted on the spindle and are secured by screwing support 34 onto the spindle. Support 34 is fastened in its turn by means of locking ring 53. The unit, which is obtained in this way, is inserted into house 31 and projections 36 are inserted into guiding channels 37 and the free spindle end is pressed into the bushing, whereas bayonet projections 75 are guided through recesses 76, until they end up at the same level as locking groove 77, at which level they are stopped by means of a step 83 in house 31. Now the required axial position has been reached and the unit is rotated 90° in relation to the house, projections 75 being forced into the portion of groove 77, which is limited downwards by flange section 78. In the final phase of this rotational movement each one of lugs 79 ends up in a position in front of a guiding channel 37 and is pressed into a lower indent 84, formed therein. The pressure of spring 33 will guarantee , that the lugs are retained in their respective indents. In the final phase of the insertion of the described unit into house 31 the membrane is pushed forwards on axial projection 24, bead 27 being positioned in groove 26. The bead is then still not actuated and its cross-sectional shape is depicted by the central encirclement in Fig. 1, namely with a slight radial bulging in a direction away from groove 26 and a pronounced radial bulging towards the groove bottom. The latter bulging preferably is roughly semicircular, whereas the groove cross-section can be U-shaped. These cross-sectional shapes, which differ from each other, guarantee, that space will be available for a constriction room and that a substantial, permanently acting radial sealing force can be developed , when the bead is compressed, when the complete upper part in the next phase with its coupling end 21 is inserted into coupling end 55 of the lower part. In addition to the valve body, by means of bore 61, bead fold 29 and particularly its in an radial direction outer part will act as a soft guiding notch. In the final phase of said insertion movement the in a radial direction outer side of the bead runs along the upper/outer portion of inner wall 18 of the cup, until this portion fully or mainly will be positioned in front of groove 26, and then will fasten and elastically deform the bead, which is depicted in the lower encirclement in Fig. 1.

Holding flange 25 is also important to some extent in this context, because it will force the membrane area to a position inside/below the bead between itself and wall 18, an additional sealing as well as an additional stabilizing of the coupling bond being obtained in this way, which latter is made permanent by mounting locking ring 23 in groove 22. A slight pressure against the free axial end of the bead can be generated in this way, which end thus is compressed and , when it springs back, elastically retains flange 20 against locking ring 23.

The differential pressure regulator , completely assembled in this manner, can now be mounted in a medium conduit, and a signal circuit and measuring equipment respectively can then be connected. In case it is later necessary to disassemble the upper part, it is possible to do this with or without the attachments connected to the regulator, and it is only necessary to remove locking ring 23, and then lift up the complete upper part from the lower part.

Two extreme regulating positions are shown in Fig. 1, in which the left part shows a manually obtained closing position. The hand wheel has then been completely screwed onto thread 44 and the bushing has thereby been moved as far as possible into house 31. The bushing then abuts with its inlet to blind hole 80 against a bevel 86 all around, which terminates the thread on the spindle within this area, and moves the spindle, until the valve body abuts seat 7, lower O-ring accomplishing the sealing against the seat, whereas the upper O-ring abuts against step 60 in order to seal the inlet against the outlet also via bore 61.

In the open position (shown in the right part of Fig. 1) forces acting on the valve body, which have been transferred from the membrane and the membrane plate, can be balanced via spring 33. The pressure above and below the membrane, the so called differential pressure, will be held constant within a certain pressure and flow area. By means of the spring the differential pressure can be changed, i.e. by changing the position of spring support 34, which will be done by inserting a tool in opening 45 and rotating the bushing, support 34 being moved upwards and downwards respectively along the spindle. It is of course possible to select a certain differential pressure area by the selection of a spring. However, the spring according to the invention often makes such a selection superfluous or expands said area, because it is designed to be partly linear and partly progressive, which can be obtained by means of a non-uniform pitch and/or a non-uniform spring wire diameter design. In this way curve-shaped force characteristics are obtained and the length of the spring can be made substantially smaller than the length of a spring with an even pitch and an constant wire diameter. Tests with a regulator with a spring designed in this way have shown, that only 75 % of the total Δp-tolerance depends on the spring and that the rest of the percentage, 25 %, includes the mechanical inertias of the regulator construction and this is independent of the Δp-value, which has been selected within the operational area of the product.

When the differential pressure has been adjusted by means of a tool inserted into the bushing, which pressure by the way can be read during the operation of the regulator, this preadjustment position can be fixed by turning the hand wheel e.g. anti-clockwise, until a distinct stop has been reached. In this position the bushing cannot be rotated using normal forces and consequently the preadjustment has been secured. The fixing is obtained by tightening flange 47 against the bottom of groove 48, the friction between these two parts generating the locking force.

The present invention is not limited to the above described embodiments, but it can be modified and supplemented in an arbitrary manner within the scope of the following claims. Thus, the various locking rings e.g. can be replaced by other stop and locking means, known per se.

## Claims

1. A differential pressure regulator (1) which comprises a lower part (2) and an upper part (3), which can be connected to said lower part by means of an end (21) having a stop flange (20), the lower part being provided with an inlet (4) and an outlet (5) as well as a partition (6), mounted between the inlet and the outlet and having a valve seat (7), against which a valve body (8) is designed to act, which is mounted at one end of a valve spindle (9), mounted in said upper part (3) and actuated in one direction of a biased compression spring (33) and surrounded by a membrane (30), which is affixed by means of a bead (27) all around between said upper part (3) and said lower part (2) and which seals these parts against each other, whereby the coupling end (21) of the upper part (3) beyond the stop flange (20) towards the lower part is designed as an annular projection (24) directed in the axial direction of the upper part (3), **characterized in that** the projection (24) with its free end forms a radially outwardly directed holder flange (25) and surrounds a groove (26) all around, in which the membrane bead (27) is inserted, **in that** the fixation area of the membrane (28) mainly is axially directed, i.e. mainly parallel to the insertion direction, **in that** a sealing is designed to be done and reinforced respectively by radially compressing the bead area (27) between an axial inner wall (18) of the coupling end (55) of the lower part and the bottom of the groove (26), **in that** the stop flange (20) acts on a step (19) in the coupling end of the step (19), and **in that** a locking ring (23) is designed to rotatably and fixedly hold the upper part against the lower part.

2. A differential pressure regulator according to claim 1, **characterized in that** the valve body and the end of the spindle close to the valve body respectively are concentrically surrounded by a cup (16), which preferably has a plane bottom (17) with a relatively large diameter, which bottom is surrounded by said inner wall (18) , which is shorter and circular cylindric and functions as a support for the area of the membrane close to the bead , which area develops into a soft rounded fold (29) all around away from the wall (18) and the bottom (17), which fold develops into a plane central membrane part (30).

3. Adifferential pressure regulator according to claim 2, **characterized in that** the outer diameter of the holding flange (25) is somewhat smaller than the inner diameter of the cup in order to fasten the membrane between the inner wall (18) and the holding flange (25).

4. A differential pressure regulator according to claim 1-3, **characterized in that** the upper part (3) comprises an eg die-cast house (31), which can be coupled to the lower part by means of said coupling end (21), **in that** the house (31) suitably is non-rotation symmetrical in its cross-section and preferably has an in an, axial direction as a truncated cone designed central part (32), the base of which coincides with or is adjacent the coupling end (21), **in that** said cone-shaped part houses partly the spindle (9) and partly said compression spring (33), which surrounds the spindle and has a conical shape, the upper, narrow spring end being retained by a support (34), which with a central hole (35) having an inner thread is threaded on a spindle provided with an outer thread and which with two projections (36) on mutually diametrically opposite sides is guided in axial guiding channels (37) in the house (31), which channels are made of the parts (38) of the house, which are designed in a corresponding way, a rotation of the spindle and a not rotatable axial movement of the support (34) in the house (31) causing a compression and an expansion of the spring (33) respectively.

5. A differential pressure regulator according to claim 4, **characterized in that** at least one house portion (38) is provided with an upper connection (39) and a lower connection (40), which in an artibtrary order are designed for partly a signal circuit connection and partly a deairation.

6. A differential pressure regulator according to any of claims 1-5, **characterized in that** the spindle (9) extends with its outer end into the area within the free end of the house (31), which holds a bushing (42), the end of which , which projects out of the house, is surrounded by a hand wheel (41), and **in that** the hand wheel is rotatably mounted on the bushing and with an inner thread (43) is threaded on an outer thread (44) on the house (31), whereas the bushing (42) is not rotatably mounted but mounted axially with a relative displacement on the outer spindle end, which is non-rotationally symmetrical, eg hexagonal and is inserted into a blind hole (80), designed in a corresponding way, in the bushing, which is designed to be rotated by means of an opening (45), in the free bushing end for e.g. a hexagon spanner.

7. A differential pressure regulator according to claim 6, **characterized in that** the bushing (42) is designed to be inserted from within into a circumferential flange (46) in the house, a flange (47) all around mounted at the far end of the bushing projecting into a groove (48), which surrounds the inner end of the circumferential flange in the house (31) and consequently functions as an insertion stop, and **in that** the bushing is surrounded by an O-ring (50), which is inserted into a groove (49) all around and seals against the opening of the circumferential flange, and holds the hand wheel (41) in place by means of a locking ring (51) adjacent its free outer end.

8. A differential pressure regulator according to claims 6 or 7, **characterized in that** adjacent the bushing but at a small distance from it and the outer gable of the house (31) the spindle is surrounded by a groove (52) and a locking ring (53) inserted into it, the function of which consists of preventing, that the support (36), already when the spring (33) is slightly biased, abuts said gable and in this way restricts or eliminates the movement path of the valve body, **in that** the locking ring (53) is designed to be pressed into an extension (54) all around in the support adjacent its inner thread in order to efficiently lock the locking ring along about 300° of the cross-sectional area of the locking ring, and **in that** said groove (52) is deeper than the depth of the outer thread in a radial direction in order to prevent, that the thread will be deformed and the locking ring will come loose.

9. A differential pressure regulator according to any of claims 1-8, **characterized in that** the valve body (8) at its end, exposed to seat (7), is provided with a groove (56) all around, which suitably has a mainly semicircular cross-section with an embracing, mainly radially projecting lip (57), which subsequent to an insertion of an O-ring (58) into the groove is designed to be pressed downwards in an axial direction and fasten the O-ring, with the exception of only a portion of its axial extension through the groove (56), which in the same direction is reduced mainly by halves.

10. Differential pressure regulator according to any of claims 1-9, **characterized in that** the valve body at a distance away from the seat (7) is surrounded by a groove (59), the wall of which, which faces the seat, is somewhat withdrawn in order to pass a step (60) in the bore (61) of the lower part (2) for the valve body and with slip fit fill up the narrow part (62) of this bore adjacent the seat, whereas the groove wall, which is turned away from the seat, with slip fit fills up the upper bore part with a large diameter, **in that** in a closed position an O-ring (63), which is inserted into the groove (59), which is turned away from the seat, is designed. with an elastic deformation, to abut the step (60), and **in that** the last-mentioned O-ring (63) has such small dimensions compared to said other bore part, that solely a negligible friction exists between said parts.

11. Differential pressure regulator according to any of claims 1-10, **characterized in that** the membrane (28) with its plane portion (30) is supported by an also plane membrane plate (67) and, suitably with its intermediate part (68), provided with holes, with which part it surrounds the spindle, applied over and around the center, with holes, of the plate in order to abut the lower side of the plate with a lower annual termination (69), which is designed as an elastic stop against the side of the valve adjacent the cup, and **in that** the membrane and the plate suitably are vulcanized together in order to obtain an easily mountable unit, which preferably is slidably mounted on the spindle.

12. A differential pressure regulator according to any of claims 4-11, **characterized in that** the spring (33) is supported with its wide lower end by a spring holder (70), which suitably comprises a stamped and bent metal plate having a central opening (71) with a diameter, which is substantially larger than the diameter of the spindle, which extends through the opening, and possibly with holes (72) for a mounting fixture, **in that** the center (73) of the holder, suitably is elevated in order to form a lower edge section (74) all around, against which the spring is self-centering, **in that** in e.g. two mutually diametrically opposite positions the edge section is extended outwards in a radial direction in order to form bayonet projections (75), designed to be inserted into the house (31) through corresponding recesses (76), circumferentially outside which in an axial direction above which the house is provided with a locking groove (77) all around, into which the projections (75) are designed to be inserted, **in that** the locking groove downwards is restricted by flange sections (78), which are interrupted symmetrically by guiding channels (37), ie with a guiding channel arranged centrally in relation to a corresponding flange section, and **in that** the projection preferably each on is designed with its downwardly stamped locking lug (79), which will be inserted into the corresponding guiding channel, when the spring holder is rotated 90° into its mounting position.

13. A differential pressure regulator according to any of claims 1-12, **characterized in that** the bead has a cross-section with a slight radial bulge in a direction away from the groove (26) of the projection (24) and a pronounced bulge turned towards the bottom of the groove, **in that** the last-mentioned bulge mainly is semi-circular, whereas the cross-section of the groove mainly is U-shaped in order to guarantee, that space is available for a constriction area, and **in that** a substantial permanently acting radial sealing force will be developed , when the bead is compressed, when the coupling end (21) of the upper part is inserted into the coupling end (55) of the lower part and/or **in that** the holding flange (25) presses the membrane area into a position inside/between the bead between itself and the cup wall (18) in order to obtain an additional sealing as well as an additional stabilizing of the coupling bond, preferably a slight pressure by the stop flange (20) against the free axial end of the bead being generated in order to compress it and with spring force retain the flange (20) in an elastic abutment against the locking ring (23).

14. A differential pressure regulator according to any of claims 1-13, **characterized in that** the spring has a partly linear and a partly progressive section by means of a non-uniform pitch and/or a non-uniform spring wire diameter design.

15. A differential pressure regulator according to any of claims 1-14, **characterized in that** the preadjustment position of the bushing is designed to be fixed by rotating the hand wheel, until a distinct stop has been reached, and **in that** the fixation is obtained , when the flange (47) is pressed against the groove (48), the friction between these two parts resulting in the locking force.

## Patentansprüche

1. Ein Differenzdruckregler (1) der ein Unterteil (2) und ein Oberteil (3) umfasst, das mit besagtem Unterteil mittels einem Ende (21) mit einem Halteflansch (20) verbunden sein kann, wobei das Unterteil mit einem Einlass (4) und einem Auslass (5) sowie einer Trennwand (6) zwischen dem Einlass montiert und der Auslass mit einem Ventilsitz (7) versehen ist, gegen welchen ein Ventilkörper (8) einwirken soll, der an einem Ende einer Ventilspindel (9) montiert wird, die in besagtem Oberteil (3) montiert und in einer Richtung einer vorbelasteten Druckfeder (33) betätigt und von einer Membrane (30) umschlossen ist, die mittels einer Verstärkungsrippe (27) am dazwischen liegenden besagten Oberteil (3) und am besagten Unterteil (2) befestigt ist und die diese Teile gegeneinander abdichtet, wodurch das Kupplungsende (21) des Oberteils (3) oberhalb des Halteflanschs (20) zum Unterteil hin als eine ringförmige Verlängerung (24) gestaltet ist, die in axialer Richtung des Oberteils (3) gerichtet ist, **gekennzeichnet dadurch, dass** die Verlängerung (24) mit ihrem freien Ende einen radial nach außen gerichteten Halteflansch (25) bildet und eine Nut (26) umgibt, in welche die Verstärkungsrippe (27) der Membrane eingeführt wird, dass der Befestigungsbereich der Membrane (28) vorwiegend axial gerichtet ist, d. h. vorwiegend parallel zur Einsetzrichtung, dass eine Dichtung hergestellt bzw. durch radiales Komprimieren des Verstärkungsrippenbereichs (27) zwischen einer axialen Innenwand (18) des Kupplungsendes (55) des Unterteils und des Nutbodens (26) verstärkt werden soll, dass der Halteflansch (20) auf einen Abschnitt (19) im Kupplungsende des Abschnitts (19) einwirkt, und dass eine Schraubklemme (23) so entworfen ist, um das Oberteil drehbar und fest gegen das Unterteil zu halten.

2. Ein Differenzdruckregler nach Anspruch 1, **gekennzeichnet dadurch, dass** der Ventilkörper bzw. das nahe beim Ventilkörper liegende Spindelende konzentrisch von einer Kappe (16) umgeben sind, welche vorzugsweise einen ebenen Boden (17) mit verhältnismäßig großem Durchmesser hat, wobei dieser Boden von besagter Innenwand (18) umgeben ist, die kürzer und rundzylindrisch ist und als Träger für den Bereich der Membrane nahe der Verstärkungsrippe fungiert, deren Bereich in einer leicht abgerundeten Falte (29) von der Wand (18) und dem Boden (17) entfernt entwickelt wurde, wobei sich besagte Falte zu ein ebenes zentrales Membranteil (30) entwickelt.

3. Ein Differenzdruckregler nach Anspruch 2, **gekennzeichnet dadurch, dass** der Außendurchmesser des Halteflansches (25) etwas kleiner ist als der Innendurchmesser der Kappe, zur Befestigung der Membrane zwischen der Innenwand (18) und dem Halteflansch (25).

4. Ein Differenzdruckregler nach Anspruch 1 - 3, **gekennzeichnet dadurch, dass** das Oberteil (3) z. B. ein Kokillengehäuse (31) umfasst, das mittels besagtem Kupplungsende (21) an das Unterteil gekuppelt werden kann, dass das Gehäuse (31) zweckmäßig nicht rotationssymmetrisch im Querschnitt ist und vorzugsweise ein in axialer Richtung zentrales Teil (32) aufweist, das als Stumpfkegel gestaltet ist, dessen Basisteil mit dem Kupplungsende (21) zusammentrifft oder daran anliegt, dass besagtes kegelförmiges Teil teilweise die Spindel (9) und teilweise besagte Druckfeder (33) aufnimmt, welche die Spindel umgibt und eine kegelförmige Form aufweist, wobei das obere, nahe liegende Federende von einer Stütze (34) zurückgehalten wird, welche mit einem zentralen Loch (35) mit einem Innengewinde auf einer mit Außengewinde versehenen Spindel versehen ist und welche mit zwei Vorsprüngen (36) auf gegenseitig diametral gegenüberliegenden Seiten in axialen Führungskanälen (37) im Gehäuse (31) geführt wird, wobei die Kanäle aus den Gehäuseteilen (38) hergestellt sind, die entsprechend gestaltet sind, wobei eine Rotation der Spindel und eine nicht drehende axiale Bewegung der Stütze (34) im Gehäuse (31) eine Komprimierung bzw. eine Ausdehnung der Feder (33) verursacht.

5. Ein Differenzdruckregler nach Anspruch 4, **gekennzeichnet dadurch, dass** mindestens ein Gehäuseteil (38) mit einer oberen Verbindung (39) und einer unteren Verbindung (40) ausgestattet ist, welche in einer willkürlichen Reihenfolge teilweise für einen Signalleitungsanschluss und teilweise für eine Entlüftung gestaltet werden.

6. Ein Differenzdruckregler nach einem beliebigen der Ansprüche 1 - 5, **gekennzeichnet dadurch, dass** sich die Spindel (9) mit deren äußeren Ende in den Bereich innerhalb des freien Gehäuseabschlusses (31) erstreckt, das eine Buchse (42) trägt, wobei deren aus dem Gehäuse vorstehendes Ende von einem Handrad (41) umgeben ist, sowie **dadurch**, dass das Handrad drehbar auf der Buchse montiert ist und mit einem Innengewinde (43) auf einem Außengewinde (44) am Gehäuse (31) versehen ist, während die Buchse (42) nicht drehbar sondern axial montiert wird mit einer relativen Verschiebung auf das äußere Ende der Spindel, das nicht rotationssymmetrisch, z. B. sechseckig und in eine Blindbohrung (80) eingeführt, entsprechend in der Buchse ausgestaltet ist, um mittels einer Öffnung (45) im freien Buchsenende gedreht zu werden für z. B. einen Sechskantschlüssel.

7. Ein Differenzdruckregler nach Anspruch 6, **gekennzeichnet dadurch, dass** die Buchse (42) so gestaltet ist, um innerhalb eines Umfangsflansches (46) ins Gehäuse eingeführt zu werden, wobei ein rundum montierter Flansch (47) am äußeren Ende der Buchse in eine Nut (48) hineinragt, die das innere Ende des Umfangsflansches im Gehäuse (31) umgibt und folglich als Einführanschlag dient, sowie **dadurch, dass** die Buchse von einem Dichtungsring (50) umschlossen wird, der in eine Nut (49) eingeführt ist und gegen die Öffnung des Umfangsflanschs abdichtet und das Handrad (41) mittels eines an deren freien äußeren Ende anliegenden Klemmring (51) platziert.

8. Ein Differenzdruckregler nach Anspruch 6 oder 7, **gekennzeichnet dadurch, dass** die Spindel an die Buchse anliegend, jedoch auf einen kleinen Abstand davon und dem äußeren Stirnseite des Gehäuses (31) von einer Nut (52) und einem darin eingeführten Klemmring (53) umschlossen wird, wobei deren Funktion darin besteht, zu verhindern, dass die Stütze (36) immer, wenn die Feder (33) leicht vorbelastet ist, gegen besagte Stirnseite anschlägt und so die Bewegungsbahn des Ventilkörpers einschränkt oder beseitigt, dass der Klemmring (53) so ausgelegt ist, um in eine Verlängerung (54) um die Stütze herum neben deren Innengewinde eingedrückt zu werden, um den Klemmring etwa um 300° entlang der Querfläche des Klemmrings zu verriegeln, und dass besagte Nut (52) tiefer als das Außengewinde in einer radialen Richtung liegt, um zu verhindern, dass das Gewinde verformt wird und sich der Klemmring löst.

9. Ein Differenzdruckregler nach einem der Ansprüche 1 - 8, **gekennzeichnet dadurch, dass** der Ventilkörper (8) an seinem zur Aufnahme (7) gerichteten Ende mit einer Nut (56) ausgestattet ist, welche einen geeigneten vorwiegend halbrunden Querschnitt mit einer umfassenden, hauptsächlich radial vorstehenden Lippe (57) aufweist, welche nach Einsetzen eines Dichtungsrings (58) in die Nut nach unten in eine axiale Richtung gedrückt wird und den Dichtungsring befestigt, mit Ausnahme von nur einem Teil seiner axialen Ausdehnung durch die Nut (56), welche hauptsächlich in der selben Richtung zur Hälfte reduziert wird.

10. Differenzdruckregler nach einem beliebigen der Ansprüche 1 - 9, **gekennzeichnet dadurch, dass** der Ventilkörper auf einem Abstand von der Aufnahme (7) entfernt von einer Nut (59) umgeben ist, wobei deren der Aufnahme gegenüberliegende Wand, etwas zurückgezogen ist, um in die Bohrung (61) des Unterteils (2) eine Aussparung (60) für den Ventilkörper einzuführen und das schmale Teil (62) der an die Aufnahme anliegende Bohrung mit Schlupfsitz aufzufüllen, während die von der Aufnahme abgewandte Nutwand mit Schlupfsitz das obere Bohrungsteil mit großem Durchmesser auffüllt, dass in geschlossener Position ein Dichtungsring (63), der in die Nut (59) eingeführt und von der Aufnahme abgewandt ist, mit einer elastischen Verformung zum Anschlag an die Aussparung (60) gestaltet ist, sowie **dadurch**, **dass** letzterer Dichtungsring (63) solche geringe Ausmaße im Vergleich zu besagtem anderen Bohrungsteil hat, dass zwischen besagten Teilen nur eine unbedeutende Reibung besteht.

11. Differenzdruckregler nach einem beliebigen der Ansprüche 1 -10, **gekennzeichnet dadurch, dass** die Membrane (28) mit deren ebenen Teil (30) durch eine ebenfalls ebene Membranplatte (67) und mit deren mit passenden Bohrungen versehenen Zwischenteil (68) abgestützt ist, wobei die Spindel mit diesem Teil umgeben ist, der über die Mitte mit Bohrungen der Platte versehen ist, um gegen die untere Seite der Platte mit einem unteren ringförmigen Abschluss (69) anzuschlagen, der als ein elastischer Anschlag gegen die an die Kappe anliegende Seite des Ventils gestaltet ist, sowie dass die Membrane und die Platte entsprechend zusammen vulkanisiert werden, um eine leicht montierbare Einheit zu erhalten, welche vorzugsweise gleitend auf der Spindel montiert wird.

12. Ein Differenzdruckregler nach einem beliebigen der Ansprüche 4 - 11, **gekennzeichnet dadurch, dass** die Feder (33) mit deren unteren weiten Ende durch einen Federhalter (70) abgestützt wird, welcher eine passende gestanzte und gebogene Metallplatte umfasst, mit einer zentralen Öffnung (71) mit einem Durchmesser, der im wesentlichen breiter als jener der Spindel ist, die sich durch die Öffnung hindurch erstreckt, und möglichst mit Bohrungen (72) für eine Montagebefestigung versehen ist, dass die Mitte (73) des Halters zweckmäßigerweise erhoben ist, um einen unteren Kantenabschnitt (74) zu bilden, gegen welchen die Feder selbstzentrierend wirkt, dass z.B. der Kantenabschnitt in zwei diametral gegenüberliegenden Positionen in radialer Richtung nach außen hin verläuft, um Bajonettvorsprünge (75) zu bilden, die so gestaltet sind, um durch entsprechende Vertiefungen (76) in das Gehäuse (31) eingeführt zu werden, außerhalb welchem umfangsmäßig in einer axialen Richtung und oberhalb welchem das Gehäuse rundum mit einer Verschlußnut (77) versehen ist, in welcher die Vorsprünge (75) eingeführt werden, dass die Verschlußnut durch Flanschabschnitte (78) nach unten abgegrenzt ist, die symmetrisch von Führungskanälen (37) unterbrochen sind, z. B. zentral mit einem Führungskanal zur entsprechenden Flanschsektion hin angebracht, und dass der Vorsprung vorzugsweise jeweils mit dessen nach unten gestanzten Verschlussansatz (79) ausgestaltet ist, der in den entsprechenden Führungskanal eingeführt wird, wenn der Federhalter um 90° in seine Montageposition gedreht wird.

13. Ein Druckdifferenzregler nach einem beliebigen der Ansprüche 1 - 12, **gekennzeichnet dadurch, dass** die Verstärkungsrippe einen Querschnitt mit einer geringfügig radialen Ausbuchtung in einer von der Nut (26) des Vorsprungs (24) abgewandten Richtung und eine ausgeprägte, zum Boden der Nut hin gewandte Ausbauchung hat, dass letztere genannte Ausbuchtung vorwiegend halbrund ist, während der Querschnitt der Nut vorwiegend U-förmig ist, um zu gewährleisten, dass dieser Raum für einen engen Bereich verfügbar ist, und dass grundsätzlich eine ständig wirkende radiale Dichtungskraft entwickelt werden soll, wenn die Verstärkungsrippe komprimiert ist, wenn das Kupplungsende (21) des Oberteils in das Kupplungsende (55) des Unterteils eingeführt wird und/oder dass der Halteflansch (25) den Membranbereich in einer Position innerhalb/zwischen der Verstärkungsrippe selbst und der Kappenwand (18) hineingedrückt wird, um eine zusätzliche Dichtung sowie eine zusätzliche Stabilisierung der Kupplungsverbindung zu erreichen, wobei vorzugsweise ein geringer Druck durch den Halteflansch (20) gegen das freie axiale Ende der Verstärkungsrippe erzeugt wird, um dieses abzudichten und den Flansch (20) mit Federkraft in elastischem Anschlag gegen den Klemmring (23) zu halten.

14. Ein Differenzdruckregler nach einem beliebigen der Ansprüche 1 - 13, **gekennzeichnet dadurch, dass** die Feder teilweise einen linearen und teilweise einen fortschreitenden Abschnitt über eine ungleichmäßige Steigung und/oder eine ungleichmäßigen Auslegung des Federdrahtdurchmessers aufweist.

15. Ein Differenzdruckregler nach einem beliebigen der Ansprüche 1 - 14, **gekennzeichnet dadurch, dass** die Voreinstellungsposition der Laufbuchse durch Rotieren des Handrades befestigt werden soll bis ein kennzeichnender Halt erreicht wird, und dass die Befestigung erreicht wird, wenn der Flansch (47) gegen die Nut (48) gedrückt wird, wobei die Reibung zwischen diesen beiden Teilen zur Schließkraft führt.

## Revendications

1. Régulateur de pression différentielle (1) comprenant une partie inférieure (2) et une partie supérieure (3), qui peut être reliée à ladite partie inférieure au moyen d'une extrémité (21) ayant une bride d'arrêt (20), la partie inférieure étant pourvue d'une entrée (4) et d'une sortie (5) ainsi que d'une cloison (6), montée entre l'entrée et la sortie et ayant un logement (7), contre lequel doit intervenir un corps de vanne (8), lequel est monté à une extrémité d'une tige de vanne (9), montée dans ladite partie supérieure (3) et actionnée dans la direction d'un ressort de compression incliné (33) et entourée d'une membrane (30), qui est attachée au moyen d'une nervure (27) tout autour entre ladite partie supérieure (3) et ladite partie inférieure (2) et qui assure l'étanchéité de ces pièces l'une contre l'autre, de manière telle que l'extrémité de raccordement (21) de la partie supérieure (3) au-delà de la bride d'arrêt (20) vers la partie inférieure soit conçue comme une projection annulaire (24) dirigée dans la direction axiale de la partie supérieure (3), **caractérisé en ce que** la projection (24) avec son extrémité libre forme une bride de support orientée radialement vers l'extérieur (25) et entoure une rainure (26) tout autour, dans laquelle la nervure de membrane (27) est insérée, **en ce que** la zone de fixation de la membrane (28) est principalement dirigée axialement, par exemple principalement parallèlement à la direction d'insertion, **en ce qu**'un joint est conçu pour être fait et renforcé respectivement en comprimant radialement la zone de nervure (27) entre une paroi intérieure axiale (18) de l'extrémité de raccordement (55) de la partie inférieure et le fond de la rainure (26), **en ce que** la bride d'arrêt (20) intervient sur un gradin (19) dans l'extrémité de raccordement du gradin (19), et **en ce qu**'un anneau de fermeture (23) est conçu pour tenir de façon rotative et fixe la partie supérieure contre la partie inférieure.

2. Régulateur de pression différentielle selon la revendication 1, **caractérisé en ce que** le corps de vanne et l'extrémité de la tige près du corps de vanne sont respectivement entourés concentriquement d'une cuvette (16), ayant de préférence un fond plan (17) dont le diamètre est relativement grand, ledit fond étant entouré par ladite paroi intérieure (18), qui est plus courte et cylindrique circulaire et fonctionne comme support pour la zone de la membrane près de la nervure, ladite zone se développant dans un pli arrondi mou (29) tout autour en s'éloignant de la paroi (18) et du fond (17), lequel pli se développe dans une partie de membrane centrale plane (30).

3. Régulateur de pression différentielle selon la revendication 2, **caractérisé en ce que** le diamètre extérieur de la bride de maintien (25) est un peu plus petit que le diamètre intérieur de la cuvette afin d'attacher la membrane entre la paroi intérieure (18) et la bride de maintien (25).

4. Régulateur de pression différentielle selon la revendication 1-3, **caractérisé en ce que** la partie supérieure (3) comprend par exemple un logement matricé (31), qui peut être accouplé à la partie inférieure au moyen de ladite extrémité de raccordement (21), **en ce que** le logement (31) est de façon appropriée symétrique non à rotation dans sa coupe transversale et a de préférence une partie centrale conçue en direction axiale comme un cône tronqué (32), dont la base coïncide avec l'extrémité de raccordement ou est adjacente à l'extrémité de raccordement (21), **en ce que** ladite partie en forme de cône contient partiellement la tige (9) et partiellement ledit ressort de compression (33), qui entoure la tige et a une forme conique, l'extrémité de ressort supérieure étroite étant retenue par un support (34), qui avec une forure centrale (35) ayant un filetage intérieur est fileté sur une tige pourvu d'un filetage extérieur et qui avec deux projections (36) sur des côtés diamétralement opposés entre eux est guidé dans des canaux de guidage axiaux (37) dans le logement (31), lesdits canaux étant faits des pièces (38) du logement, conçues de façon correspondante, une rotation de la tige et un mouvement axial non rotatif du support (34) dans le logement (31) causant une compression et une expansion du ressort (33) respectivement.

5. Régulateur de pression différentielle selon la revendication 4, **caractérisé en ce qu'**au moins une partie du logement (38) est pourvue d'une connexion supérieure (39) et d'une connexion inférieure (40), qui dans un ordre arbitraire sont conçues partiellement pour un couplage de circuit de signal et partiellement pour une désaération.

6. Régulateur de pression différentielle selon l'une quelconque des revendications 1-5, **caractérisé en ce que** la tige (9) s'étend avec son extrémité extérieure dans la zone entre l'extrémité libre du logement (31), qui tient un raccord (42), dont l'extrémité, qui s'avance hors du logement, est entourée par un volant de manoeuvre (41), et **en ce que** le volant de manoeuvre est monté de façon rotative sur le raccord et avec un filetage intérieur (43) est fileté sur un filetage extérieur (44) sur le logement (31), tandis que le raccord (42) n'est pas monté de façon rotative mais monté axialement avec un déplacement relatif sur l'extrémité extérieure de la tige, qui est symétrique non à rotation, par exemple hexagonale, et est insérée dans un trou borgne (80), conçu de façon correspondante dans le raccord, qui est conçu pour être tourné au moyen d'une ouverture (45), dans l'extrémité de raccord libre pour, par exemple, une clé hexagonale.

7. Régulateur de pression différentielle selon la revendication 6, **caractérisé en ce que** le raccord (42) est conçu pour être inséré depuis l'intérieur dans une bride circonférentielle (46) dans le logement, une bride (47) montée tout autour à l'extrémité du raccord s'avançant dans une rainure (48), qui entoure l'extrémité intérieure de la bride circonférentielle dans le logement (31) et par conséquent fonctionne comme un arrêt d'insertion, et **en ce que** le raccord est entouré par une garniture annulaire (50), qui est insérée dans une rainure (49) tout autour et assure l'étanchéité contre l'ouverture de la bride circonférentielle, et maintient en place le volant de manoeuvre (41) au moyen d'un anneau de fermeture (51) adjacent à son extrémité extérieure libre.

8. Régulateur de pression différentielle selon les revendications 6 ou 7, **caractérisé en ce que** à proximité du raccord mais à une courte distance de ce dernier et du pignon extérieur du logement (31), la tige est entourée d'une rainure (52) et un anneau de fermeture (53) inséré dans celui-ci, dont la fonction consiste à empêcher que le support (36), quand le ressort (33) est déjà légèrement incliné, touche ledit pignon et de cette façon limite ou élimine le parcours de mouvement du corps de vanne, **en ce que** l'anneau de fermeture (53) est conçu pour être pressé dans une extension (54) tout autour dans le support adjacent à son filetage intérieur afin de serrer efficacement l'anneau de fermeture le long d'environ 300° de la surface de la section de l'anneau de fermeture, et **en ce que** ladite rainure (52) est plus profonde que la profondeur du filetage extérieur dans une direction radiale afin d'empêcher que le filetage se déforme et l'anneau de fermeture se dégage.

9. Régulateur de pression différentielle selon l'une quelconque des revendications 1-8, **caractérisé en ce que** le corps de vanne (8) à son extrémité exposée au logement (7) est pourvu d'une rainure (56) tout autour, qui a de façon appropriée une coupe transversale principalement semi-circulaire avec un rebord d'étreinte s'avançant principalement radialement (57), qui après une insertion d'une garniture annulaire (58) dans la rainure est conçue pour être pressée vers le bas dans une direction axiale et pour attacher la garniture annulaire, à l'unique exception d'une partie de son extension axiale à travers la rainure (56), qui dans la même direction est réduite principalement par moitiés.

10. Régulateur de pression différentielle selon l'une quelconque des revendications 1-9, **caractérisé en ce que** le corps de vanne à une distance éloignée du logement (7) est entouré d'une rainure (59), dont la paroi, orientée vers le logement, est quelque peu retirée afin de passer devant un gradin (60) dans la forure (61) de la partie inférieure (2) pour le corps de vanne et afin de remplir avec raccord lisse la partie étroite (62) de cette forure proche du logement, tandis que la paroi de rainure, détournée du logement, remplit avec raccord lisse la partie de forure supérieure avec un grand diamètre, **en ce que** dans une position fermée une garniture annulaire (63), qui est insérée dans la rainure (59), détournée du logement, est conçue avec une déformation élastique, pour toucher le gradin (60), et **en ce que** la garniture annulaire susmentionnée (63) a des dimensions tellement petites comparées à ladite autre partie de forure, que seulement une friction insignifiante existe entre lesdites pièces.

11. Régulateur de pression différentielle selon l'une quelconque des revendications 1-10, **caractérisé en ce que** la membrane (28) avec sa partie plane (30) est supportée par une plaque de membrane également plane (67) et, de façon appropriée avec sa partie intermédiaire (68), pourvue de forures, avec laquelle partie elle entoure la tige, appliquée sur le centre et autour de celui-ci, avec des forures, de la plaque afin de toucher le côté inférieur de la plaque avec une terminaison inférieure en anneau (69), qui est conçue comme un arrêt élastique contre le côté de la soupape proche de la cuvette, et **en ce que** la membrane et la plaque sont convenablement vulcanisées ensemble afin d'obtenir une unité facile à monter, qui est de préférence montée de manière coulissante sur la tige.

12. Régulateur de pression différentielle selon l'une quelconque des revendications 4-11, **caractérisé en ce que** le ressort (33) est supporté avec son extrémité inférieure large par un support de ressort (70), qui comprend de façon appropriée une tôle forgée et pliée ayant une ouverture centrale (71) avec un diamètre substantiellement plus large que le diamètre de la tige, qui s'étend à travers l'ouverture, et si possible avec des forures (72) pour une fixation de montage, **en ce que** le centre (73) du support est convenablement soulevé afin de former une section de bord inférieure (74) tout autour, contre laquelle le ressort est autocentrant, **en ce qu**'en, par exemple, deux positions diamétralement opposées entre elles la section de bord est étendue vers l'extérieur dans une direction radiale afin de former des projections à baïonnette (75), conçues pour être insérées dans le logement (31) à travers des enfoncements correspondants (76), circonférentiellement extérieurs qui dans une direction axiale au-dessus duquel le logement est pourvu d'une rainure de blocage (77) tout autour, dans laquelle les projections (75) doivent être insérées, **en ce que** la rainure de blocage vers le bas est limitée par des sections de bride (78), qui sont interrompues symétriquement par les canaux de guidage (37); c'est-à-dire avec un canal de guidage disposé centralement par rapport à une section de bride correspondante, et **en ce que** la projection de préférence chacune est conçue avec son anse de blocage forgée vers le bas (79), qui sera insérée dans le canal de guidage correspondant, quand le support de ressort est tourné à 90° dans sa position de montage.

13. Un régulateur de pression différentielle selon l'une quelconque des revendications 1-12, **caractérisé en ce que** la nervure a une coupe transversale avec un petit bombement radial suivant une direction qui s'éloigne de la rainure (26) de la projection (24) et un bombement prononcé tourné vers le fond de la rainure, **en ce que** le bombement susmentionné est principalement semi-circulaire, tandis que la coupe transversale de la rainure est principalement en forme de « U » afin de garantir que de l'espace soit disponible pour une zone de constriction, et **en ce qu**'une force substantielle d'étanchéité radiale à effet permanent sera développée, quand la nervure est comprimée, quand l'extrémité de raccordement (21) de la partie supérieure est insérée dans l'extrémité de raccordement (55) de la partie inférieure et/ou **en ce que** la bride de maintien (25) presse la zone de membrane dans une position dans/entre la nervure entre celle-ci et la paroi de cuvette (18) afin d'obtenir une étanchéité supplémentaire ainsi qu'une stabilisation supplémentaire du lien de couplage, de préférence une petite pression par la bride d'arrêt (20) contre l'extrémité axiale libre de la nervure étant produite afin de la comprimer et de retenir la bride (20) avec force de ressort dans une butée élastique contre l'anneau de fermeture (23).

14. Régulateur de pression différentielle selon l'une quelconque des revendications 1-13, **caractérisé en ce que** le ressort a une section partiellement linéaire et une section partiellement progressive au moyen d'un pas non uniforme et/ou un diamètre de fil métallique de ressort non uniforme.

15. Régulateur de pression différentielle selon l'une quelconque des revendications 1-14, **caractérisé en ce que** la position de préajustage du raccord est conçue pour être fixée en faisant tourner le volant de manoeuvre, jusqu'à ce qu'un arrêt distinct a été atteint, et **en ce que** la fixation est obtenue quand la bride (47) est pressée contre 1a rainure (48), 1a friction entre ces deux pièces donnant lieu à la force de verrouillage.
